# NEUE EUROPÄISCHE PATENTSCHRIFT

(11) **EP 0 751 175 B2**
(45) Veröffentlichungstag und Bekanntmachung des Hinweises auf die Entscheidung über den Einspruch: **09.06.2010**
(45) Hinweis auf die Patenterteilung: 20.10.1999
(21) Anmeldenummer: 96109931.4
(22) Anmeldetag: 20.06.1996
(51) Int. Cl.: C08K 5/00, C09D 5/03, C08L 101/00, C08K 5/134, C08K 9/04

(54) **Dispersionspulver mit erhöhter Selbstentzündungstemperatur**
Dispersible powder having increased self-inflammation temperature
Poudres dispersables ayant une température d'auto-inflammation augmentée

(30) Priorität: 26.06.1995 DE 19523115
(43) Veröffentlichungstag der Anmeldung: 02.01.1997
(73) Patentinhaber: Elotex AG, 6203 Sempach Station (CH)
(72) Erfinder: Geissler, Ulrich, Dr., 65239 Hochheim (DE); Rinno, Helmut, Dr., 65719 Lorsbach (DE)
(74) Vertreter: Ackermann, Joachim

(56) Entgegenhaltungen:
- EP-A- 0 228 657
- EP-A- 0 315 084
- EP-A- 0 499 435
- EP-A1- 0 044 159
- EP-A1- 0 368 697
- EP-A1- 0 426 499
- DE-A1- 3 022 469
- DE-B- 1 294 378
- DE-U- 9 301 866
- FR-A- 2 292 022
- FR-A- 2 413 458
- US-A- 5 212 245
- 'Ullmann's encyclopedia of industrial chemistry', Bd. 4, 1985, VCH VERLAGSGESELLSCHAFT MBH, WEINHEIM Seiten 91 - 111
- EUGEN MÜLLER: 'methoten der organischen chemie', Bd. 4, teil 2 1975, GEORG THIEME VERLAG, STUTTGART Artikel HOUBEN-WEYL, Seiten 1047 - 1101
- MARY HOWE-GRANT: 'encycloedia of chemical technology', Bd. 4, teil 3 1992, WILEY-INTERSCIENCE PUBLICATION Artikel KIRK-OTHMER: 'antibiotics to batteries', Seiten 424 - 447
- CLARIENT: 'mowilith - pulver : technische daten' TECHNISCHES MARKETING CELLULOSEETHER UND DISPERSIONSPULVER März 2001, WIESBADEN,
- WAKER-CHEMIE GMBH: 'produktübersicht vinnapas-dispersionspulver' VINYLACETAT-POLYMERE
- RHODIA: 'rhoximat - redispergierbare dispersionspulver' COATING AND CONSTRUCTION MATERIALS

## Beschreibung

Durch Emulsionspolymerisation hergestellte wäßrige Kunststoffdispersionen werden auf außerordentlich zahlreichen Gebieten, beispielsweise als Bindemittel für Farben, Klebstoffe, Papierstreichmassen und im Bauwesen eingesetzt.

In den zurückliegenden Jahren wurden jeweils steigende Mengen dieser wäßrigen Dispersionen nicht mehr direkt verwendet, sondern durch Verdampfen der wäßrigen Phase, vorzugsweise durch Sprühtrocknung, zunächst die Polymerisate als sogenannte Dispersionspulver gewonnen. Bei geeigneter Vorgehensweise und unter Verwendung entsprechender Emulgatoren und Schutzkolloide sind Dispersionspulver, die nach der Sprühtrocknung mit Teilchengrößen von 10 bis 250 µm Durchmesser anfallen, nach dem Verrühren mit Wasser wieder gut reemulgierbar, wobei sie weitgehend wieder in Originalteilchen etwa mit der Partikelgröße der Ausgangsdispersionen von beispielsweise 0,1 bis 5 µm zerfallen.

Der Vorteil der Dispersionspulver liegt vor allem in der Möglichkeit, sie mit hydraulisch abbindenden Bindemitteln wie Zement und Gips in standardisierten vorgefertigten, sehr gut lagerfähigen Trockenmischungen einsetzen und erst unmittelbar vor der Verwendung durch Zugabe von Wasser gebrauchsfertig einstellen zu können. Diese vorgefertigten Mischungen sind ebenso wie die Dispersionspulver selbst nicht frostempfindlich und erfordern deshalb an der Baustelle geringeren Aufwand bei der Lagerung im Vergleich zu wäßrigen bzw. pastösen Produkten.

Haupteinsatzgebiete solcher Pulver sind hydraulisch abbindende Massen, beispielsweise Wandspachtelmassen, Betonreparaturmörtel, Bodenausgleichsmassen, kunststoffvergütete Putze, Dichtungsschlämmen, zementhaltige Fugenmörtel, pulverförmige Baukleber, beispielsweise Fliesenkleber, Wärmedämmverbundsysteme, und zementfreie Beschichtungen, beispielsweise Anstriche, Putze, Fugen-, Wand- und Deckenspachtelmassen. Weitere Einsatzgebiete sind Tapetenkleister, Gips- und Anhydrit-haltige Massen, keramische Massen und Klebstoffe.

Den zahlreichen vorteilhaften Eigenschaften der Dispersionspulver stehen jedoch andere gegenüber, die bei Transport, Lagerung und Handhabung beachtet werden müssen.

Pulverförmige organische Stoffe mit großer spezifischer Oberfläche können bei erhöhter Lagertemperatur, insbesondere in großen Silos, zur Selbsterwärmung oder sogar Selbstentzündung neigen. Es ist deshalb auch bei Dispersionspulvern wichtig, daß eine Erwärmung oder Selbstentzündung bei erhöhter Lagertemperatur sicher ausgeschlossen werden kann.

Ein Einstufungskriterium für diese Eigenschaft ist die Selbstentzündungstemperatur. Sie wird in einem 1000 ml Drahtnetzwürfel gemessen.
Die pulverförmige Substanz wird in den Probenbehälter bis zum Rand eingefüllt und 24 Stunden bei 140 °C gelagert.
Es wird beobachtet, ob die Temperatur in der Probe 200 °C übersteigt.

Dieses Kriterium basiert auf der Selbstentzündungstemperatur von Holzkohle, die 50 °C für eine kubische Probe von 27 m³ und 140 °C für eine 1000 ml-Probe beträgt.

Nach der Gefahrgutverordnung Straße (GGVS)
(Literatur: Testkriterien und Testverfahren zur Einstufung von gefährlichen Stoffen der Gefahrgutklassen 4.1, 4.2, 4.3 und 5.1, K.O. Storck Verlag, Hamburg) bzw. UN-Empfehlungen vom Committee of Experts on the Transport of dangerous Goods erfolgt die Einstufung von Stoffen in folgende Klassen:
Klasse 4.1 Entzündbare feste Stoffe
Klasse 4.2 Selbstentzündliche Stoffe
Klasse 4.3 Stoffe, die in Berührung mit Wasser entzündbare Gase entwickeln
Klasse 5.1 Entzündend (oxidierend) wirkende Stoffe

Für die einfache und sichere Handhabung von Dispersionspulvern ist es wichtig, daß die Bedingungen der Klasse 4.1 erreicht werden. Demnach muß gewährleistet sein, daß beim langzeitigen Erwärmen auf 140 °C in einer standardisierten Meßanordnung keine Selbstentzündung eintritt und die Temperatur im Kern der Probe nach 24 Std. Lagerung bei 140 °C Umgebungstemperatur nicht über 200 °C gestiegen ist.

Werden diese Kriterien nicht erfüllt, erfolgt eine Einstufung in die Gefahrgutklassen 4.2, 4.3 oder 5.1. Dies bedingt einen höheren Aufwand an sicherheitstechnischen Maßnahmen bei Herstellung, Transport, Lagerung und Handhabung.

Der Zusatz von Antioxidantien zu polymeren organischen Massen ist bereits vorgeschlagen worden. Da Polymerisate bei Lagerung an Luft bei erhöhter Temperatur, zum oxidativen Abbau der Polymerketten und damit zu Verfärbungsreaktionen, zum Verlust der mechanischen Festigkeit und zur Versprödung neigen, hat man solchen technischen Produkten Antioxidantien zugesetzt, die bei der thermoplastischen Verarbeitung bzw. bei der bestimmungsgemäßen Anwendung unter erhöhter Temperatur verstärkt der Gefahr eines oxidativen Abbaus ausgesetzt sind.

In der DE-B 12 89 037 wird ein Verfahren zum Stabilisieren von Dispersionen von Oxalkylen- oder Polyoxyalkylengruppen enthaltenden Verbindungen durch Zusatz von Bisphenolcarbonsäureestern beschrieben.

In der DE-A 21 56 422 werden mehrwertige Ester der Bisphenolcarbonsäuren als Antioxidantien in Dispersionen erwähnt. Die beschriebenen Dispersionen werden beispielsweise zur Beschichtung von Gewebebahnen eingesetzt. Durch Zusatz der Antioxidantien wird die Standzeit der Tauchbäder deutlich erhöht.

Aus der US-A 3 962 123 ist bekannt, lagerstabile Dispersionen, die phenolische Antioxidantien enthalten, herzustellen. Derartige Dispersionen enthalten neben den phenolischen Antioxidantien Fettsäureseifen oder nichtionische oder anionische oberflächenaktive Substanzen und Wasser.

Die US-A 5 059 347 und 5 196 142 betreffen ebenfalls lagerstabile Emulsionen phenolischer Antioxidantien, die ein Fettsäuresalz und einen Fettalkohol enthalten.

In der EP-A 0 439 427 werden Emulsionen beschrieben, die ein phenolisches Antioxidans, ein Thiodipropionsäureester-Antioxidans und/oder ein organisches Phosphit-Antioxidans enthalten. Die erfindungsgemäßen Emulsionen werden zur Stabilisierung von in Emulsion polymerisierten Polymeren und Copolymeren eingesetzt.

Die Aufgabe der vorliegenden Erfindung bestand darin, Dispersionspulver zur Verfügung zu stellen, die eine deutlich reduzierte Neigung zur Selbstentzündung aufweisen.

Diese Aufgabe wird erfindungsgemäß durch Dispersionspulver gelöst, die Antioxidantien enthalten.

Gegenstand der vorliegenden Erfindung ist ein Dispersionspulver mit erhöhter Selbstenzündungstemperatur gemäss Anspruch 1, das mindestens ein Antioxidans enthält.

Als Antioxidantien können vorzugsweise folgende Substanzklassen eingesetzt werden:
1. Phenole, beispielsweise 4-Methoxyphenol oder Hydrochinon, insbesondere sterisch gehinderte Phenole der allgemeinen Formel 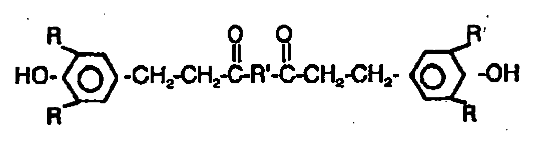
   - R:: Alkyl, bevorzugt tert.-Butyl
   - R':: -(O-CH₂-CH₂)₃-O-
   -O-(CH₂)₆-O-
   -O-CH₂-CH₂-S-CH₂-CH₂-O
   -NH-(CH₂)₆-NH-
   -NH-NH 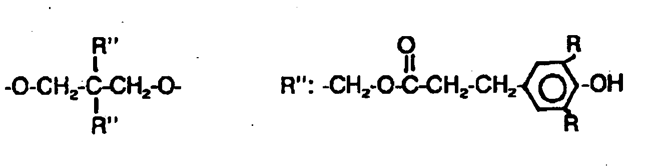
   beispielsweise
   Triethylenglykol-bis-3(3-tert.butyl-4-hydroxy-5-methylphenyl)-propionat, 1,6-Hexandiolbis-3-(3,5-di-tert.butyl-4-hydroxyphenyl)-propionat, 2,2'-Thiodiethyl-bis-[3-(3,5-di-tert.butyl-4-hydroxyphenyl)propionat], N,N'-Hexamethylen-bis-3-(3,5-di-tert.butyl-4-hydroxy-phenyl)-propionamid, das 3,5-Bis(1,1-dimethylethyl)-4-hydroxy-,2-[3-[3,5-bis(1,1-dimethylethyl)-4-hydroxyphenyl]-1-oxopropyl] hydrazid der Benzolpropansäure,
   Pentaerythrityl-tetrakis- [3-(3,5-di-tert.butyl-4-hydroxyphenyl)-propionat] oderaber folgende sterisch gehinderten Phenole:
   4-[[4,6-bis(octylthio)-1,3,5-triazin-2-yl]amino]-2,6-bis(1,1-dimethylethyl)phenol, 3,5-bis(1,1-dimethyl-ethyl)-4-hydrnxybenzolpropansäureoctadecylester2,2'-Thio-bis(4-methyl-6-tert.butyl-phenol), 3,5-Di-tert.butyl-4-hydroxybenzylphosphonsäurediethylester,1,3,5-Trimethyl-2,4,6-tris(3,5-di-tert.butyl-4-hydroxybenzyl)benzol, [[3,5-bis(1,1-dimethylethyl)-4-hydroxyphenyl]methyl]phosphonsäuremonoethylester-Calciumsalz (2:1), 2-Methyl-4,6-bis[(octylthio)methyl]phenol, Acrylsäure-2-(1,1-dimethylethyl)-6-[3-(1,1-dimethylethyl)-2-hydroxy-5-methylphenyl]methyl-4-methylphenylester, Tris(3,5-di-tert.butyl-4-hydroxybenzyl)isocyanurat, Bis[3,3-bis(4'-hydroxy-3'-tert.butylphenyl)butansäure], Bis[3,3-bis(4'-hydroxy-3'-tert.butylphenyl)butansäure]-glykolester, 3-(4'Hydroxy-3',5'-di-tert.butylphenyl)propansäure, 2,2'-Methylen-bis(4-methyl-6-tert.-butylphenol), 4,4'-Butyliden-bis-(6-tert.-butyl-3-methylphenol), 4,4'-Thio-bis(2-tert.butyl-5-methylphenol), 2,6-Di-tert.-butyl-4-methylphenol.
   Die phenolischen Antioxidantien können mit Organoschwefelverbindungen, beispielsweise Dilaurylthiodipropionat, Distearylthiodipropionat, Dioctadecyldisulfid oder n-Dodecylmercaptan kombiniert werden.
2. Phosphorverbindungen, beispielsweise
   Phenyldidecylphosphit, Decyldiphenylphosphit, Tris(nonylphenyl)phosphit, Triphenylphosphit, Tris(2,4-di-tert.-butylphenyl)phosphit. Bevorzugt wird Tris-[2-tert.-butyl-4-(2-methyl-4-hydroxy-5-tert.-butyl)-phenylmercapto-5-methyl-phenyl]phosphit.
3. Sterisch gehinderte Amine, beispielsweise
   das Polykondensat aus Bernsteinsäure und 4-Hydroxy-2,2,6,6-tetramethyl-1-piperidinethanol, N,N"'-[1,2-Ethandiylbis[[4,6-bis-[butyl(1,2,2,6,6-pentamethyl-4-piperidinyl)amino]-1,3,5-triazin-2-yl]imino]-3,1-propandiyl] bis[N',N"-dibutyl-N',N"-bis(1,2,2,6,6-pentamethyl-4-piperidinyl)-1,3,5-triazin-2,4,6-triamin, Poly[[6[(1,1,3,3-tetramethylbutyl)amino]-1,3,5-triazin-2,4-diyl] [2,2,6,6-tetramethyl-4-piperidinyl)imino]-1,6-hexandiyl[(2,2,6,6-tetramethyl-4-piperidinyl)imino]].
4. Sonstige Verbindungsklassen
   Weiterhin können als Stabilisatoren Phenothiazin sowie Alkyl-oder Arylmercaptane, beispielsweise n-Dodecylmercaptan oder 2-Methyl-5-tert.butylthiophenol verwendet werden.

Die Antioxidantien können sowohl einzeln als auch in Kombination eingesetzt werden.

Besonders bevorzugte Antioxidantien sind sterisch gehinderte Phenole, Hydrochinon sowie Phenothiazin.

Gegenstand der Erfindung ist auch ein Verfahren zur Herstellung von Dispersionspulvern mit erhöhter Selbstenzündungstemperatur durch Zugabe von Antioxidantien zu Dispersionspulvern oder durch Zusatz von Antioxidantien zu Dispersionen und anschließende Sprühtrocknung, gemäss den Ansprüchen 9 und 10.

Das Antioxidans oder die Mischung kann zur Dispersion entweder pulverförmig, gelöst in einem organischen Lösemittel, beispielsweise Ethanol, oder dispergiert in einer Emulgator- oder Schutzkolloid-Lösung, beispielsweise Polyvinylalkohol zugegeben werden.

Eine gewisse Wasserlöslichkeit der Antioxidantien kann von Vorteil sein, da in diesem Falle das Antioxidans unter den Bedingungen der Sprühtrocknung auf der Oberfläche der Partikel angereichert wird.

Bei Antioxidans-Zugabe zu einem Dispersionspulver wird die Mischung mehrere Stunden auf einem Rollbock homogenisiert.

Die erforderlichen Zugabemengen hängen vom eingesetzten Antioxidans und von der Art des Dispersionspulvers ab. Sie liegen in der Regel zwischen 0,05 und 2 Gew.-%, insbesondere zwischen 0,1 und 1 Gew.-%, bezogen auf Dispersionspulver.

Als Basispolymerisate können insbesondere Vinylesterpolymerisate, (Meth)acrylat- und Styrol(Meth)acrylat-Polymerisate eingesetzt werden, jedoch sind auch andere Monomerkombinationen möglich.

Geeignete Vinylester-Polymerisate sind Vinylacetat-Homopolymere oder Copolymere des Vinylacetats mit Ethylen und/oder weiteren Vinylestern, wie Vinylpropionat, Vinylpivalat, Vinylester von ®Versatic-Säure 9, 10 oder 11 (Shell-Chemie, α,α-Dialkyl-verzweigte Carbonsäuren), Vinyl-2-ethylhexanoat und/oder Estern der Acrylsäure und/oder Methacrylsäure mit geradkettigen, verzweigten oder cyclischen Alkoholen mit 1 bis 22 Kohlenstoffatomen.

Die (Meth)acrylat- und Styrol-(Meth)acrylat-Polymerisate leiten sich von Polymerisaten aus Styrol und/oder Estern der Acrylsäure und/oder Methacrylsäure mit geradkettigen, verzweigten oder cyclischen aliphatischen Alkoholen mit 1 bis 22 Kohlenstoffatomen ab.

Die erfindungsgemäßen mindestens ein Antioxidans enthaltenden Dispersionspulver gemäss Anspruch 1 weisen vorzugsweise eine Selbstentzündungstemperatur oberhalb von 150 °C, insbesondere oberhalb von 165 °C, auf, gemessen in einem vollständig mit dem Dispersionspulver gefüllten 400 ccm Zylinder aus einem Stahldrahtnetz.

Die folgenden Beispiele dienen zur näheren Erläuterung der Erfindung. Die in den Beispielen genannten Teile und Prozente beziehen sich auf das Gewicht, soweit nicht anders vermerkt.

### Beispiel 1

Eine mit Polyvinylalkohol als Schutzkolloid stabilisierte Dispersion auf Basis Vinylacetat, Versaticsäure-10-vinylester und Butylacrylat (45:45:10) wird unter Zugabe einer Antibackmittel-Kombination aus Talk und Dolomit sprühgetrocknet. Der Antibackmittel-Gehalt beträgt 14%.
Das isolierte Dispersionspulver wird mit verschiedenen Mengen an Bis-[3,3-bis(4'-hydroxy-3'-tert.butylphenyl)butansäure]glykolester (®Hostanox O3, Hoechst) 24 Stunden auf einem Rollbock (Firma Broß) gemischt.
Von dem Originalpulver und den mit Antioxidans versetzten Proben werden die Selbstentzündungstemperaturen in Anlehnung an das bereits erwähnte "Testverfahren zur Einstufung von gefährlichen Stoffen" bestimmt.
Die Versuchsdurchführung wird im folgenden beschrieben:

### Geräte:

Trockenschrank ED 53 (Firma Binder),
Zweikanalschreiber Servogor (Firma BBC/Goerz),
Eisen/Konstantan-Thermoelemente,
Probenbehälter (400 ccm Zylinder, Durchmesser 8 cm, Höhe 8 cm), aus rostfreiem Stahldrahtnetz (166 mesh, Drahtstärke 63 µm)
Schutzkorb (geringfügig größer als der Probenbehälter) aus rostfreiem Stahldrahtnetz (28 mesh, Drahtstärke 300 µm) (beide Firma Spörl)

### Versuchsdurchführung:

Der Probenbehälter wird in den Schutzkorb eingesetzt.
Das Dispersionspulver wird in den Probenbehälter bis zum Rand eingefüllt. Der Behälter wird mehrmals leicht aufgestoßen. Wenn sich die Probe abgesetzt hat, wird wieder bis zum Rand aufgefüllt. Das überstehende Material wird auf der Höhe des Randes abgestreift.
Die Trockenschranktemperatur wird auf 150 °C eingestellt und für 24 Stunden aufrechterhalten.
Der mit Dispersionspulver gefüllte Drahtnetzzylinder wird auf einen Gitterrost in den Trockenschrank gestellt.
Eines der Thermoelemente wird in der Mitte der Probe, das andere zwischen Probenbehälter und Trockenschrankwand angeordnet.
Die Temperaturen werden kontinuierlich gemessen, zur Auswertung wird die maximale Temperatur in der Probe herangezogen.

| Zugesetzte Menge an Hostanox O 3 [%, bez. auf Pulver] | Maximale Temperatur in der Probe (Tₘₐₓ) [°C] |
|---|---|
| 0 | 265 |
| 0,1 | 254 |
| 0,15 | 192 |
| 0,2 | 159 |
| 0,25 | 152 |

Die Ergebnisse zeigen eine Abnahme der maximalen Probentemperatur mit zunehmender Menge an Antioxidans. Ab einer Zusatzmenge von 0,15 %, bez. auf Pulver, steigt die Probentemperatur nicht mehr über 200 °C an.

### Beispiel 2

Zu dem in Beispiel 1 beschriebenen Dispersionspulver wurden jeweils 0,25 % der folgenden Antioxidantien zugegeben und der Temperaturanstieg bei Warmlagerung (150 °C, 24 Std.) bestimmt:

| Zugesetztes Antioxidans | Maximale Temperatur in der Probe (Tₘₐₓ)[°C] |
|---|---|
| kein (Vergleich) | 265 |
| Hostanox OSP1 (a) | 150 |
| Hostanox 03-Säure (b) | 150 |
| ®Irgaphos 168 (c) | 232 |
| ®Chimassorb 944 FL (d) | 178 |
| Phenothiazin | 150 |
| 2,6-Di-tert.-butyl-4-methylphenol | 150 |

(a) Tris[2-tert.-butyl-4-(2-methyl-4-hydroxy-5-tert.-butyl)-phenylmercapto-5-methylphenyl]-phosphit (Hoechst)
(b) Bis[3,3-bis(4'-hydroxy-3'-tert.butylphenyl)butansäure] (Hoechst)
(c) Tris(2,4-di-tert.butylphenyl)phosphit (Ciba-Geigy).
(d) Poly[[6-[(1,1,3,3-tetramethylbutyl)amino]-1,3,5-triazin-2,4-diyl] [2,2,6,6-tetramethyl-4-piperidinyl)imino]-1,6-hexandiyl[(2,2,6,6-tetramethyl-4-piperidinyl)imino]] (Ciba-Geigy).

### Beispiel 3

1500 Teile der in Beispiel 1 angegebenen Dispersion mit einem Feststoffgehalt von 41 % werden mit einer Lösung von 1,54 Teilen Hostanox O 3 in 15 Teilen Ethanol versetzt (0,25 %, bez. auf Pulver) und anschließend unter Zugabe der Antibackmittel-Kombination aus Beispiel 1 sprühgetrocknet.

Nach 24-stündiger Warmlagerung bei 150 °C steigt die Temperatur im Pulver nahezu nicht an (Tₘₐₓ = 152 °C).

### Beispiel 4

1413 Teile der in Beispiel 1 angegebenen Dispersion mit einem Feststoffgehalt von 42,6 % werden mit einer Mischung versetzt, deren Herstellung im folgenden beschrieben wird:

In 72 Teile kaltes Wasser werden 13,4 Teile eines Polyvinylalkohols (®Mowiol 4-88, Hoechst) Viskosität einer 4%igen wäßrigen Lösung: 4 mPa·s, Hydrolysegrad: 88 Mol-%, Esterzahl: 140 mg KOH/g, Restacetyl-Gehalt: 11 %) unter Rühren eingestreut. Unter ständigem Rühren wird die Suspension auf 80 - 90 °C aufgeheizt. Nachdem der Polyvinylalkohol gelöst ist, werden 1,2 Teile Hostanox O 3 langsam eingestreut und noch ca. 30 Minuten weitergerührt. Danach wird abgekühlt.

Die hergestellte Dispersion wird wie zuvor beschrieben sprühgetrocknet.

Auch das auf diese Weise hergestellte Dispersionspulver zeigt keine merkliche Temperaturerhöhung bei Warmlagerung (Tₘₐₓ = 151 °C).

### Beispiel 5

1500 Teile der Dispersion aus Beispiel 1 (Feststoffgehalt 41 %) wurden mit 1,54 Teilen n-Dodecylmercaptan (0,25 %, bez. auf Feststoff) versetzt und anschließend sprühgetrocknet.

Auch dieses Dispersionspulver zeigt keine Temperaturerhöhung bei Warmlagerung (Tₘₐₓ = 150 °C).

### Beispiel 6

Eine mit Polyvinylalkohol als Schutzkolloid stabilisierte Dispersion auf Basis Vinylacetat und Ethylen (76:24) wird unter Zugabe von Kaolin als Antibackmittel sprühgetrocknet. Der Antibackmittelgehalt beträgt 12 %.

Zu dem Dispersionspulver werden jeweils 0,25 % der folgenden Antioxidantien zugegeben und der Temperaturanstieg bei Warmlagerung (150 °C, 24 Std.) bestimmt:

| Zugesetztes Antioxidans | Maximale Temperatur in der Probe (Tₘₐₓ) [°C] |
|---|---|
| kein (Vergleich) | 269 |
| Hostanox 03 | 200 |
| Hostanox 03-Säure (b) | 159 |
| ®Irganox 245 (e) | 186 |
| Irganox 1076 (f) | 161 |
| Antioxidans (g) | 152 |
| Hostanox OSP1 (a) | 164 |
| Chimassorb 944 FL (d) | 226 |

| Zugesetztes Antioxidans | Maximale Temperatur in der Probe (Tₘₐₓ)[°C] |
|---|---|
| Irgaphos 168 (c) | 214 |
| Hydrochinon | 150 |
| Phenothiazin | 151 |
| 4-Methoxyphenol | 170 |

(e) Triethylenglykol-bis-3(3-tert.butyl-4-hydroxy-5-methyl-phenyl)propionat
(f) Benzolpropansäure-3,5-bis(1,1-dimethylethyl)-4-hydroxy-octadecylester
(g) 3-(4'Hydroxy-3',5'-di-tert.butylphenyl)propansäure

### Beispiel 7

Eine mit Polyvinylalkohol als Schutzkolloid stabilisierte Dispersion auf Basis Vinylacetat, Versaticsäure-10-vinylester und 2-Ethylhexylacrylat (53:22:25) wird unter Zugabe von amorphem Siliciumdioxid als Antibackmittel sprühgetrocknet. Der Antibackmittelgehalt beträgt 10 %.

Bei 24 Std. Lagerung des Dispersionspulvers wird ein Temperaturanstieg auf 450 °C beobachtet.

Das mit 0,5% Phenothiazin versetzte Dispersionspulver zeigte lediglich einen Temperaturanstieg auf 164 °C.

### Beispiel 8

Es wird ein Dispersionspulver auf Basis Vinylacetat, Versaticsäure-10-vinylester (20:80) mit amorphem Siliciumdioxid als Antibackmittel eingesetzt.

Auch dieses Dispersionspulver zeigt nach 24 Std. Lagerung einen Temperaturanstieg auf 450 °C.

Nach Zusatz von 0,5% Phenothiazin liegt die maximale Temperatur bei 157 °C.

## Patentansprüche

1. In Wasser reemulgierbares Dispersionspulver mit erhöhter Selbstentzündungstemperatur, das mindestens ein Antioxidans und ein Schutzkolloid enthält.

2. Dispersionspulver gemäß Anspruch 1, **dadurch gekennzeichnet, dass** als Antioxidans ein Phenol enthalten ist.

3. Dispersionspulver gemäß Anspruch 2, **dadurch gekennzeichnet, dass** als Phenol ein sterisch gehindertes Phenol der Formel 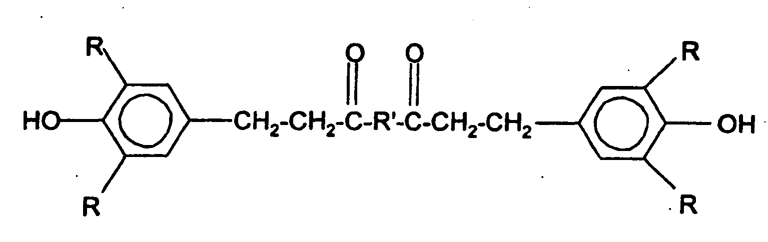
R: Alkyl, bevorzugt tert.-Butyl
R': -(O-CH₂-CH₂)₃-O- -O-(CH₂)₆-O- -O-CH₂-CH₂-S-CH₂-CH₂-O- -NH-(CH₂)₆-NH- -NH-NH- 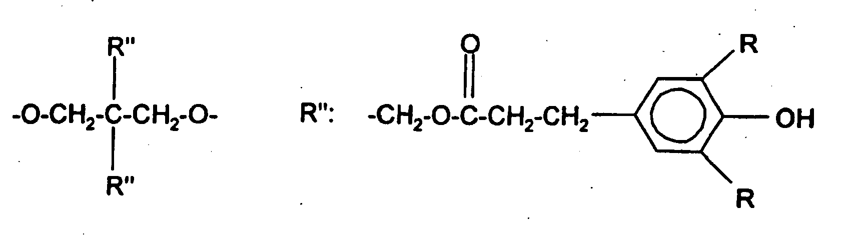
enthalten ist.

4. Dispersionspulver gemäß Anspruch 2, **dadurch gekennzeichnet, dass** als Phenol Hydrochinon enthalten ist.

5. Dispersionspulver gemäß Anspruch 1, **dadurch gekennzeichnet, dass** als Antioxidans eine Phosphorverbindung enthalten ist.

6. Dispersionspulver gemäß Anspruch 1, **dadurch gekennzeichnet, dass** als Antioxidans ein sterisch gehindertes Amin enthalten ist.

7. Dispersionspulver gemäß Anspruch 1, **dadurch gekennzeichnet, dass** als Antioxidans Phenothiazin enthalten ist.

8. Dispersionspulver gemäß Anspruch 1, **dadurch gekennzeichnet, dass** als Antioxidans ein Alkyl- oder Arylmercaptan enthalten ist.

9. Verfahren zur Herstellung von Dispersionspulvern gemäß Anspruch 1, **dadurch gekennzeichnet, dass** das Antioxidans dem Dispersionspulver zugegeben wird.

10. Verfahren zur Herstellung von Dispersionspulvern gemäß Anspruch 1, **dadurch gekennzeichnet, dass** das Antioxidans der wässrigen Dispersion zugegeben wird und die Mischung anschließend sprühgetrocknet wird.

## Claims

1. A dispersion powder of increased autoignition temperature which is re-emulsifiable in water, comprising at least one antioxidant and a protective colloid.

2. A dispersion powder as claimed in claim 1, wherein the antioxidant is a phenol.

3. A dispersion powder as claimed in claim 1, wherein the phenol is a sterically hindered phenol of the formula: 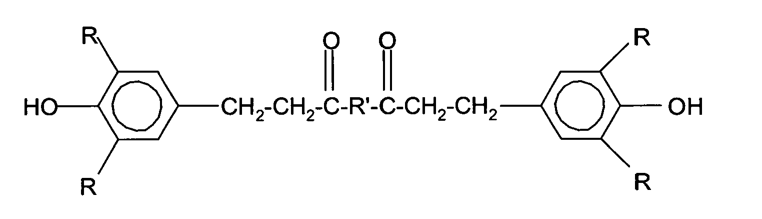
R: alkyl, perferably tert.-butyl
R': -(O-CH₂-CH₂)₃-O- -O-(CH₂)₆-O- -O-CH₂-CH₂-S-CH₂-CH₂-O- -NH-(CH₂)₆-NH- -NH-NH-

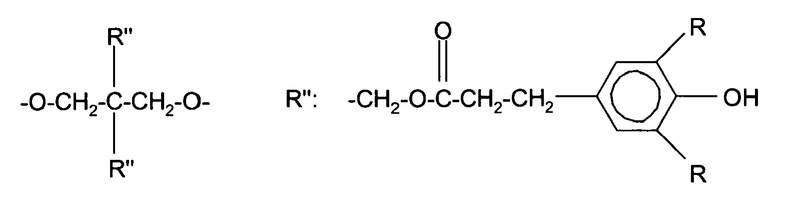

4. A dispersion powder as claimed in claim 1, wherein the phenol is hydroquinone.

5. A dispersion powder as claimed in claim 1, wherein the antioxidant is a phosphorus compound.

6. A dispersion powder as claimed in claim 1, wherein the antioxidant is a sterically hindered amine.

7. A dispersion powder as claimed in claim 1, wherein the antioxidant is phenothiazine.

8. A dispersion powder as claimed in claim 1, wherein the antioxidant is an alkyl mercaptan or aryl mercaptan.

9. A process for the preparation of a dispersion powder as claimed in claim 1, wherein the antioxidant is added to the dispersion powder.

10. A process for the preparation of a dispersion powder as claimed in claim 1, wherein the antioxidant is added to the aqueous dispersion and the mixture is subsequently spray-dried.

## Revendications

1. Poudre dispersable avec une température d'autoinflammation augmentée, qui contient au moins un antioxydant et un colloïde protecteur.

2. Poudre dispersable selon la revendication 1, **caractérisée en ce qu'**elle contient un phénol comme antioxydant.

3. Poudre dispersable selon la revendication 2, **caractérisée en ce qu'**elle contient comme phénol un phénol entravé stériquement de formule 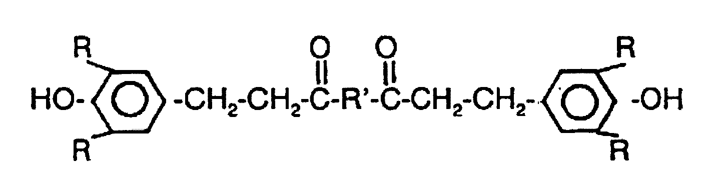
R : groupe alkyle, de préférence le tert.-butyle,
R' : -(O-CH₂-CH₂)₃-O- -(O-CH₂)₆-O- -O-CH₂-CH₂-S-CH₂-CH₂-O- -NH- (CH₂)₆-NH- -NH-NH-

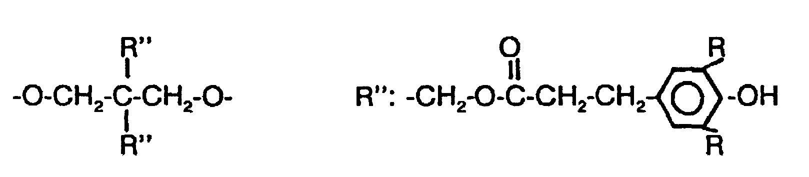

4. Poudre dispersable selon la revendication 2, **caractérisée en ce qu'**elle contient comme phénol l'hydroquinone.

5. Poudre dispersable selon la revendication 1, **caractérisée en ce qu'**elle contient comme antioxydant un composé du phosphore.

6. Poudre dispersable selon la revendication 1, **caractérisée en ce qu'**elle contient comme antioxydant une amine entravée stériquement.

7. Poudre dispersable selon la revendication 1, **caractérisée en ce qu'**elle contient comme antioxydant la phénothiazine.

8. Poudre dispersable selon la revendication 1, **caractérisée en ce qu'**elle contient comme antioxydant un alkyl- ou arylmercaptan.

9. Procédé de préparation de poudres dispersables selon la revendication 1, **caractérisé en ce qu'**on ajoute l'antioxydant à la poudre dispersable.

10. Procédé de préparation de poudres dispersables selon la revendication 1, **caractérisé en ce qu'**on ajoute l'antioxydant à la dispersion aqueuse et **en ce qu'**on sèche ensuite le mélange par atomisation.
